Europäisches Patentamt

European Patent Office

Office européen des brevets

(11) Numéro de publication: **0 267 092 B1**

(12) **FASCICULE DE BREVET EUROPEEN**

(45) Date de publication de fascicule du brevet: **27.05.92**

(21) Numéro de dépôt: **87402330.2**

(22) Date de dépôt: **19.10.87**

(51) Int. Cl.⁵: **D21H 13/40**, D21H 17/37, D21H 17/52, D21H 21/16, D21H 21/36, D21H 27/08, H01M 2/16, C08J 5/08, C08J 5/24

(54) **Papier à base de fibres de verre.**

(30) Priorité: **17.10.86 FR 8614430**

(43) Date de publication de la demande:
**11.05.88 Bulletin 88/19**

(45) Mention de la délivrance du brevet:
**27.05.92 Bulletin 92/22**

(84) Etats contractants désignés:
**BE CH DE ES FR GB IT LI LU NL SE**

(56) Documents cités:
**EP-A- 0 091 381**
**EP-A- 0 091 866**
**EP-A- 0 131 524**
**FR-A- 2 537 921**
**US-A- 4 286 977**

**TAPPI, vol. 58, no. 5, mai 1975, pages 56-60, Atlanta, Georgia, US; N.B. SCHEFFEL: "Glass, ceramic, and quartz fibers for the paper industry"**

(73) Titulaire: **ORGEL**
**"Les Miroirs" 18, Avenue d'Alsace**
**F-92400 Courbevoie(FR)**

(72) Inventeur: **Rieunier, Jean-Baptiste**
**6, rue Gambetta**
**F-60100 Nogent sur Oise(FR)**
Inventeur: **Le Breton, Patrick Bernard**
**53, route de Mouy à Cauffry**
**F-60290 Rantigny(FR)**
Inventeur: **Fontar, Marcel**
**Rue du Père Lothin à Mogneville**
**F-60140 Liancourt(FR)**

(74) Mandataire: **Le Vaguerese, Sylvain Jacques**
**SAINT-GOBAIN RECHERCHE 39, quai Lucien Lefranc**
**F-93304 Aubervilliers Cedex(FR)**

## Description

L'invention a trait à des papiers essentiellement constitués de fibres de verre dont le diamètre moyen est inférieur à trois microns, utilisés notamment pour la réalisation de filtres aérosols hautes-performances et de séparateurs d'éléments de batteries.

Le terme générique "fibre de verre" désigne toute une gamme de produits aux caractéristiques fort diverses, aux nombres desquels figurent notamment la technique de fibrage utilisée et le diamètre moyen des fibres produites. Les fibres dites "textiles", obtenues par un étirage mécanique continu de filaments de verre produits par une filière, ont un diamètre moyen généralement compris entre 5 et 15 microns pour ne tenir compte que des filaments unitaires. Les fibres dites "d'isolation", obtenues par des procédés centrifuges utilisant pour l'étirage des courants gazeux, ont elles un diamètre moyen allant de 5 à 6 microns pour les produits standards d'isolation à moins de 1 micron pour les applications les plus sophistiquées. Nous emploierons généralement le terme "microfibres" pour désigner des fibres de verre obtenues par ce dernier procédé et dont le diamètre moyen est inférieur à 3 microns.

En dehors de cette exceptionnelle finesse, les microfibres présentent également des qualités reconnues à toutes les fibres de verre que sont une très grande inertie chimique, une facilité de mise en oeuvre et un coût de production relativement modeste surtout en comparaison avec les autres fibres minérales. Toutes ces qualités confèrent aux microfibres un assez grand pouvoir attractif. Un débouché plus particulièrement visé par la présente invention est la fabrication de papiers à base de microfibres, destinés par exemple, aux filtres aérosols, notamment pour les salles blanches ou à être utilisés comme séparateurs d'éléments de batteries.

De tels papiers sont fabriqués selon les techniques papetières courantes. Pour un filtre aérosol dit absolu, une composition typique comprend par exemple à côté des microfibres environ 5% de fibres textiles coupées, un liant acrylique, éventuellement un fongicide et un hydrofugeant. Les perfectionnements à cet art ont porté jusqu'à ce jour sur la nature et les quantités respectives des différentes additifs ainsi que sur le diamètre moyen des microfibres, soit sur le rapport pondéral des microfibres de 2 à 3 microns et des microfibres de 1 micron ou moins. Le brevet US-A-4 286 977 fournit un exemple des améliorations susceptibles d'être ainsi obtenues.

Ainsi, si l'on décrit (Tappi, vol. 58 - n.5 - mai 1975 - pages 56-60 - Atlanta, Georgia, US ; N.B. Scheffel : "Glass, ceramic, and quartz fibers for the paper industry") des fibres de verre très fines, en particulier présentant des diamètres nettement inférieurs à 3 microns, celles-ci sont obtenues par un procédé dit d'étirage à la flamme comportant une phase d'étirage mécanique subie par les filaments sortant des filières pour fibres textiles de renforcement. Quant aux fibres qui, toujours selon ce document, sont obtenues par contre par un procédé d'étirage par centrifugation, qui seul intéresse l'invention, leurs diamètres sont d'au moins 3,5 microns.

Des compositions analogues sont utilisées pour des séparateurs d'éléments de batteries. Pour ces derniers, il est particulièrement favorable que le papier à base de microfibres présente un taux de rétention le plus élevé possible et une ascension capillaire élevée. De plus, quelle que soit l'utilisation prévue du papier, une bonne compressibilité et un grand bouffant sont très avantageux. Il a été observé par la demanderesse que dans ce but il était très intéressant de disposer d'un papier de densité plus faible à grammage constant.

Conformément à la revendication 1, le papier selon l'invention est à base de microfibres de verre de 2 à 3 microns de diamètre et/ou de microfibres de moins de 1 micron de diamètre, lesdites microfibres étant produites par centrifugation et étirage, par un courant gazeux annulaire longeant la paroi périphérique d'en centrifugeur, à vitesse élevée, de filaments de verre fondu s'échappant vers l'extérieur par des orifices de la paroi périphérique du centrifugeur dont la vitesse périphérique est comprise entre 50 et 90 m/s, et dont la tirée de verre est inférieure à 6 tonnes par jour et par mètre de périphérie du centrifugeur pour les microfibres de 2-3 microns et est inférieure à 1 tonne par jour par mètre de périphérie du centrifugeur pour des microfibres de moins de 1 micron. La vitesse des gaz du courant annulaire d'étirage est comprise entre 200 et 250 m/s pour la production de microfibres de 2-3 microns (soit une pression dynamique de l'ordre de 50 à 80 kilopascals), et entre 300 et 320 m/s pour la production de 1 microns (soit une pression dynamique de l'ordre de 100 kilopascals), des pressions plus élevées n'étant pas souhaitées. Le degré micronaire et la surface spécifique des microfibres étant respectivement de 4,0-4,5 l/min (pour des microfibres de 2-3 microns) et de 0,5-0,7 $m^2$/g (pour des microfibres de 2-3 microns) et pour les microfibres de moins de 1 micron de 0,4-0,5 l/min et de 2,5-3 $m^2$/g, la densité dudit papier étant inférieure à 100 kg/$m^3$ dans le cas où il présente une masse surfacique inférieure ou égale à 100 g/$m^2$.

Conviennent plus particulièrement à l'invention, des centrifugeurs dont le diamètre est compris entre 550 et 1100 mm et la vitesse périphérique entre 55 et 75 m/s.

Ainsi pour un centrifugeur d'un diamètre égal à 600 mm, et une vitesse à la périphérie de 60 m/s, la tirée de verre est conformément à l'invention de préférence inférieure à 11 tonnes par jour pour des microfibres de 2-3 microns, et est inférieure à 1,8 tonnes pour des microfibres de moins de 1 micron.

De préférence différents additifs sont ajoutés au papier selon l'invention. Il peut s'agir notamment de moins de 5% de fibres de verre textiles de 6 à 7 mm de longueur et de par exemple 10 microns de diamètre moyen, d'un liant acrylique, d'un fongicide et d'un hydrofugeant.

Le procédé et le dispositif de production sont du type décrit dans les publications européennes de brevets EP-A-0 091 381 et EP-A-0 091 866. L'obtention de microfibres d'un diamètre moyen inférieur à 2 à 3 microns et surtout à 1 micron ne peut être toutefois réalisée qu'en maintenant des conditions limites avec notamment une vitesse des gaz d'étirage proche de 300-320 m/s pour les microfibres les plus fines, obtenue grâce à une augmentation très importante de la pression du brûleur et avec un centrifugeur de plus de 550 mm de diamètre, en conservant une distribution standard des orifices et sensiblement le même nombre d'orifices par unité de surface, soit comme indiqué dans le brevet EP-A-91 866 un nombre d'orifices d'environ 12.000 par mètre de périphérie de centrifugeur.

De plus, pour maintenir une très bonne qualité de fibres malgré un étirage par des gaz très violents, il est nécessaire de limiter la tirée par centrifugeur à environ 1,8 tonnes par jour pour ces mêmes microfibres de moins de 1 micron, cette dernière limitation étant tout à fait acceptable pour la production de microfibres, produit très valorisable.

Lorsque de telles microfibres sont utilisées, on obtient par voie humide un papier qui, à grammage identique, présente une densité nettement amoindrie et inférieure à 100 kg/m$^3$ - pour des masses surfaciques inférieures ou égales à 100 g/m$^2$. Cette diminution de la densité est particulièrement inattendue si on note que les microfibres utilisées pour les papiers selon l'art sont elles-aussi obtenues par des procédés de fibrage aérodynamique et comportent donc un certain caractère "frisé" qui les opposent aux fibres dites "textiles". Sans entrer dans des considérations techniques encore au stade d'hypothèses, on constate donc que sur la ligne papetière on a une organisation particulière des microfibres sélectionnées selon l'invention.

Cette moindre densité se traduit par de nombreux avantages pour les utilisateurs des papiers. Les fabrications de filtres y associent ainsi une diminution des pertes de charge pour des mêmes efficacités, soit la possibilité de filtrer des débits d'air plus importants sans nuire à la qualité de l'épuration.

Les papiers selon l'invention présentent également une plus grande ascension capillaire, ainsi qu'une rétention et une compressibilité accrues. Les fabricants de batteries pour accumulateurs tirent plus particulièrement profit de ces trois de rnières caractéristiques. Enfin, et il s'agit là, d'un aspect très avantageux des papiers selon l'invention, ceux-ci sont très facilement calandrables.

Afin de préciser plus exactement le cadre de l'invention et surtout cet aspect du calandrage, il est nécessaire de revenir sur les techniques de préparation par voie humide de ce type de papier à base de microfibres, techniques directement dérivées des voies papetières classiques - abstraction faite naturellement des problèmes liés à la préparation ou la séparation des fibres qui ici n'ont rien de végétales.

Les fibres - végétales ou minérales - sont livrées à la papeterie à l'état de balles qui doivent être désintégrées en présence d'eau dans un "pulper", cuve munie d'un agitateur créant une très forte agitation. La difficulté est ici de bien isoler les fibres sans nuire trop fortement à leur intégrité ; en pratique, le comportement des fibres dans le "pulper" est encore largement inexpliqué et on ne peut que constater si des fibres sont peu ou beaucoup dégradées par ce traitement indispensable.

La pâte ainsi préparée, à laquelle ont été éventuellement adjoints divers additifs tels des fibres dites "textiles", un liant, un fongicide et un hydrofugeant, est conduite à la machine à papier proprement dite qui comporte essentiellement une caisse de tête avec un répartiteur destinée à délivrer un jet de pâte dont la vitesse est identique sur toute la largeur de la machine, une unité de formation de la feuille se composant d'au moins une toile tournant en continu et sur laquelle se déposent les fibres qui forment ainsi une feuille humide, l'eau s'évacuant essentiellement sous l'effet de la pesanteur. La feuille humide est enfin essorée à l'aide de rouleaux compresseurs dont elle ressort avec ses pores saturées. La feuille est enfin introduite dans la sécherie où elle est comprimée et/ou se forme l'arrangement définitif entre les fibres.

En sortie de la sécherie, la feuille de papier conserve encore un faible taux d'humidité et subit un dernier séchage par exemple entre deux rouleax calandreurs chauffés, par exemple à plus de 100°C. L'efficacité de ce séchage est d'autant meilleure que les rouleaux calendreurs exercent une pression importante sur le papier et donc que l'épaisseur du papier avant calandrage est très différente de l'épaisseur cherchée à être ainsi obtenue. Les papiers réalisés avec des microfibres selon l'invention présentent une surépaisseur qui est due à leur faible densité avant calandrage. Ainsi, le contrôle de leur épaisseur définitive est nettement facilité et de plus le papier ressort très sec, ce qui signifie que ses pores sont disponibles notamment pour la filtration ou l'absorption d'électrolytes.

De cette description très schématique de la voie papetière, on comprend déjà que l'arrangement des fibres en suspension aqueuse conditionne les futures caractéristiques du papier et que des variations apparemment mineures dans la structure des fibres aient des conséquences très importante sur le produit final ; toutefois, rien ne permet actuellement d'associer à des caractéristiques précises des microfibres de telle variations du comportement en suspension dans l'eau.

Afin d'établir clairement les avantages des papiers selon l'invention, on a preparé des microfibres de 2-3 microns et des microfibres de moins de 1 micron dans les conditions décrites ci-après.

Avantageusement on utilise un verre relativement tendre dans la composition duquel entre des oxydes de bore et/ou de baryum et/ou de fluor qui améliorent la coulabilité du verre. Le verre fondu, dont la température est de l'ordre de 1200°C est envoyé suivant l'axe essentiellement vertical d'un centrifugeur, sur un organe distributeur placé à l'intérieur du centrifugeur qui divise le verre en gros filets dirigés vers la paroi périphérique interne du centrifugeur d'où ils s'échappent par un grand nombre d'orifices de faibles diamètres. Pour la production de microfibres adaptées à la réalisation de p apiers selon l'invention, le diamètre du centrifugeur doit être de préférence supérieur ou égal à 550 mm, la vitesse périphérique du centrifugeur étant comprise entre 50 et 90 m/s, de préférence entre 55 et 75 m/s. Les filaments de verre qui s'échappent du centrifugeur sont alors étirés par un courant gazeux annulaire à grande vitesse et à température élevée.

L'amélioration de la finesse des fibres est obtenue par une augmentation de la pression des brûleurs à l'origine du courant gazeux annulaire d'étirage, de manière à obtenir une vitesse des gaz d'étirage de l'ordre de 200 à 250 m/s pour la production de microfibres de 2-3 microns et de l'ordre de 300-320 m/s pour la production de microfibres de moins de 1 micron, sans ateindre des valeurs significativement plus importantes, et une température de référence - au niveau des brûleurs - de l'ordre de 1500°C. Enfin, il est connu que plus le débit de verre fondu augmente, moins grande est la finesse des fibres - aussi doit-on ici travailler avec des débits de verre par orifices du centrifugeur beaucoup plus faibles que ceux atteints dans la production des fibres d'isolation courantes. Des microfibres de finesse constante ont été obtenues avec un centrifugeur de 600 mm de diamètre dont la vitesse périphérique est de 60 m/s pour des microfibres de 2-3 microns de diamètre, une vitesse des gaz d'étirage de 200-250 m/s avec une tirée de 11-12 tonnes de verre par jour, et pour des microfibres de moins de 1 micron de diamètre, une vitesse des gaz d'étirage de 300-320 m/s avec une tirée par jour inférieure à 1,8 tonnes de verre.

La finesse des microfibres obtenues a été déterminée par la méthode du micronaire. Pour celà, on comprime une touffe de microfibres de masse donnée (3g) dans un volume prédéterminé que est ensuite traversé par un courant gazeux sous une pression prédéterminée, la mesure du débit d'air passant au travers de l'échantillon indique la perméabilité à l'air de l'échantillon et donc la plus ou moins grandes finesse des fibres qui le constitue. Le test est rapide et permet de se référer à un abaque établi préalablement, diamètre moyen des fibres/degré micronaire. A titre indicatif, notons que des fibres de verre standards pour l'isolation thermique, d'un diamètre moyen de 5-6 microns et d'une surface spécifique inférieure à 0,3 $m^2$/g présentent un degré micronaire de 25-27 1/min, alors que dans les même conditions, le degré micronaire n'est que de 4,0 - 4,5 1/min pour des microfibres selon l'invention de 2-3 microns - avec alors une surface spécifique de 0,5-0,7 $m^2$/g et de 0,4 - 0,5 1/min pour des microfibres de moins de 1 micron - avec dans ce dernier cas une surface spécifique de 2,5-3 $m^2$/g.

A partir de ces microfibres ont été préparés par la voie papetière humide des papiers de différents grammages. Ont été également préparés à titre de références - dans des conditions identiques - des papiers à base de microfibres commercialisées par la société MANVILLE Corporation, sous la marque déposée "TEMSTRAM", références code 110 (2-3 microns) et code 106 (moins de 1 micron), ces microfibres étant préparées également par un procédé de fibrage aérodynamique de fibrage avec étirage à la flamme dit procédé "aérocor".

Les mesures ont été effectuées sur des feuilles de papier de laboratoire, préparées suivant la méthode de la formette anglaise, conforme à la norme NF-50-002 - Section II - publiée en Novembre 1980. Pour celà une suspension aqueuse de pâte de masse correspondant à la masse surfacique souhaitée est versée sur une toile métallique et e st égouttée sous vide. La feuille ainsi formée est couchée sur un buvard de couchage puis, à l'aide de plaques de séchage propre de mêmes dimensions que la toile métallique, on forme une pile, comprenant la séquence répétée plusieurs fois, buvard sec - buvard couchage - feuille d'essai - plaque de séchage. La pile constituée est placée centrée sur une presse et on applique alors un premier passage sous 400 kPa en 20 s +/1 15s. Les feuilles sont enfin laissées un jour sur leur plaque de séchage en salle de conditionnement avant d'être séparées et utilisées pour les différente tests.

Une première série de tests, relatés au tableau I annexé au présent mémoire, a permis de déterminer pour les feuilles ainsi préparées leur densité et leur épaisseur, cette dernière mesure ayant été effectuée conformément à la norme NF Q 03-016 publiée en octobre 1980, c'est-à-dire sur une feuille simple, au moyen d'un micromètre de haute précision et sur une superficie et une charge fixe spécifiques. On a ainsi observé que - à grammage et à composition identiques - les papiers selon l'invention présentent des densités nettement inférieures au papier selon l'art (qui apparaissent sous la dénomination ref.). Les papiers A, B, C, correspondant à des grammages inférieurs ou égaux à 100 g/m$^2$ ont avantageusement des densités inférieures à 100 kg/m$^3$.

Cette moindre densité présente tout d'abord un avantage important pour les fabricants de filtres hautes performances qui achètent les bobines de papier au poids et gagnent ainsi de l'ordre de 15% pour les papiers A, B et C.

De plus, avec des papiers selon l'invention on observe que le colmatage du filtre s'effectue sur une portion plus grande de son épaisseur ; cette portion étant de seulement 1/3 pour les filtres formés avec des papiers selon l'art. Autrement dit, dans le cas de l'invention, la portion de papier efficace pour la filtration est plus importante et il est possible de filtrer de plus importants débits d'air.

La dernière ligne du tableau I correspond à des papiers dont la masse surfacique est de 160 g/m$^2$. Dans ce cas, aucune différence sensible d'épaisseur n'a été relevée entre le papier de référence et le papier de l'art. Cette constatation illustre bien le caractère imprévisible du comportement des microfibres en suspension dans l'eau et au cours des opérations de séchage. Le papier D ne doit toutefois pas être exclu du cadre de l'invention, car il présente un taux de rétention particulièrement avantageux par rapport aux papiers de référence.

Une autre série de tests a permis de mesurer quatre caractéristiques plus particulièrement sensibles pour les fabrications de papiers filtres ou d'éléments séparateurs de batteries : l'efficacité de filtration, l'ascencion capillaire, la rétention et la compressibilité. Les résultats des différentes mesures sont regroupés au tableau II annexé à ce mémoire.

La mesure de l'efficacité de filtration a été réalisée conformément à la méthode DOP des Etats-Unis d'Amérique, basé sur l'effet Tundall, par photométrie sur l'aérosol avec des particules de dioctylphtalate de 0,3 micromètres monodispersés à une concentration de 50 à 100 mg/m$^3$. Les chiffres indiqués, exprimés en % correspondent au rendement, c'est-à-dire au rapport de la différence des concentrations à la concentration amont. Cette mesure a permis de vérifier que les papiers selon l'invention pouvaient se substituer avec la même efficacité aux papiers de référence pour la réalisation de filtres.

Les trois autres caractéristiques mesurées concernent plus particulièrement les papiers destinés à être utilisés comme séparateurs d'éléments de batteries d'accumulateurs. Dans ce cas, les micropores du papier servent à retenir une quantité suffisante d'électrolyte pour qu'il soit à l'état liquide et ni fuit, ni ne diminue ou augmente de volume à la fin de la charge de la batterie, lorsque des gaz sont synthétisés. De ce fait, ce papier doit avantageusement retenir rapidement l'électrolyte, ce qui s e traduit par la nécessité d'une ascension capillaire élevée, permettant une augmentation des cadences de lignes de montage des batteries.

Cette dernière a été mesurée conformément à la norme NF - Q 03 -065 d'octobre 1981, et on a déterminé après 2 minutes la hauteur (en mm) à laquelle s'élève de l'eau distillée dans laquelle plongent les extrémités d'éprouvettes en papier. Le gain le plus important (plus de 10%) est obtenu avec le papier C, dont la composition en fibres est de 33% de microfibres de moins de 1 micron pour 67% de microfibres de 2-3 microns.

Pour la réalisation de batteries étanches, il est plus particulièrement avantageux de réaliser des séparateurs qui de plus retiennent une grande quantité d'électrolyte et sont donc dans un papier dont la rétention est élevée. Les résultats notés au tableau II ont été obtenus en suivant le mode opératoire de la norme NF - Q 03 068 publiée en décembre 1982. Les éprouvettes de papier sont immergées progressivement, par contact avec une surface d'eau, puis on détermine la masse d'eau absorbée après un temps d'immersion et un temps d'égouttage. Les chiffres fournis correspondent à la masse d'eau absorbée, en grammes au mètre carré, par des éprouvettes trempées 30 secondes après la fin du temps de mouillage et égouttées ensuite pendant 1 minute. Les papiers selon l'invention présentent des rétentions accrues et peuvent de ce fait être utilisés même pour des batteries soumises à des chocs ou des vibrations.

A ce seul test, le papier D fabriqué avec des microfibres selon l'invention a montré une différence de comportement très importante par rapport au papier correspondant de l'art, alors que ses autres caractéristiques sont très similaires à celui-ci.

Il est une nouvelle fois pas possible d'expliciter sérieusement ce phénomène qui pourrait être du à une répartition différente du diamètre des microfibres à l'état de surface des microfibres, et de ce fait à une structure différente des micropores du papier. Cette caractéristique inexpliquée démontre encore combien est vouée à l'échec toute extrapolation tendant à déterminer les caractéristiques des papiers à partir des caractéristiques connues des microfibres.

Une dernière mesure de compressibilité a été enfin effectuée sur les papiers B et C - et les références

5

correspondantes - d'un grammage de 100. Le mode opératoire suivi a été celui proposé sous l'intitulé "reprise de forme" par la publication de brevet FR-A-2 403 651 de la société YUASA BATTERY COMPANY LIMITED. Les pourcentages indiqués au tableau II correspondent au rapport de l'épaisseur de papier mesurée après application pendant une minute d'une charge de 20 kg/dm2 à l'épaisseur initiale sous une charge de seulement 5 kg/dm². Les papiers selon l'invention ont un taux de compressibilité très important et toujours supérieur à 95% ce qui facilite beaucoup leur mise en oeuvre ; ils peuvent en effet être assez fortement comprimés pour être mis en place entre des électrodes et la reprise ultérieure d'épaisseur assure un parfait contact entre le séparateur support de l'électrolyte et lesdites électrodes.

Ainsi donc, les papiers conformes à l'invention conviennent tout particulièrement aux deux grandes applications pour lesquelles les papiers à base de microfibres ont été développés, les filtres à air haute-performance et les éléments sépateurs de batteries d'accumulateurs. Ils ne doivent pas toutefois être limités aux applications précitées et sont également très avantageux dans le cas d'une imprégnation par des substrats liquides non aqueux, tels notamment des résines époxy utilisées par exemple dans des supports de circuits imprimés.

TABLEAU I

| | Composition (microfibres 2-3 microns/ microfibres 1 micron) | Masse surfacique (g/m²) | Densité | Epaisseur (mm) |
|---|---|---|---|---|
| Ref. A | 50-50<br>50-50 | 75<br>75 | 115<br>99 | 0,65<br>0,76 |
| Ref. B | 50-50<br>50-50 | 100<br>100 | 109<br>95 | 0,92<br>1,05 |
| Ref. C | 67-33<br>67-33 | 100<br>100 | 103<br>85 | 0,97<br>1,17 |
| Ref. D | 50-50<br>50-50 | 160<br>160 | 155<br>155 | 1,03<br>1,04 |

TABLEAU II

| | Efficacité de filtration % | Ascension capillaire | Rétention | Compressibilité |
|---|---|---|---|---|
| Ref. A | 0,02-0,04<br>0,02-0,04 | 57<br>62 | 1450<br>1840 | |
| Ref. B | 0,005-0,015<br>0,005-0,015 | 59<br>62 | 1150<br>1380 | 94%<br>95,4% |
| Ref. C | 0,4-0,6<br>0,4-0,6 | 64<br>73 | 1260<br>1370 | 95,6%<br>96,8% |
| Ref. D | ?-0,005 (x)<br>?-0,005 (x) | 67<br>66 | 2000<br>2500 | |

(x) La limite inférieure n'est pas mesurable.

**Revendications**

**1.** Papier à base de microfibres de verre comportant des microfibres de 2 à 3 microns de diamètre et/ou des microfibres de moins de 1 micron de diamètre, **caractérisé en ce que** lesdites microfibres sont des fibres de verre produites au moyen d'un étirage par un courant gazeux annulaire, à vitesse et température élevées, longeant la paroi périphérique d'un centrifugeur, de filaments de verre fondu s'échappant vers l'extérieur par des orifices de la paroi périphérique du centrifugeur dont la vitesse périphérique est comprise entre 50 et 90 m/s, et dont la tirée de verre est pour les microfibres de 2-3 microns inférieure à 6 tonnes par jour et par mètre de périphérie de centrifugeur et pour les microfibres de moins de 1 micron inférieure à 1 tonne par jour et par mètre de périphérie de centrifugeur, la vitesse du courant gazeux annulaire étant de 200-250 m/s pour les microfibres de 2-3 microns et de 300-320 m/s pour les microfibres de moins de 1 micron, le degré micronaire et la surface spécifique des microfibres étant respectivement de 4,0-4,5 l/min (pour des microfibres de 2-3 microns) et de 0,5-0,7 $m^2$/g (pour des microfibres de 2-3 microns) et pour les microfibres de moins de 1 micron de 0,4-0,5 l/min et de 2,5-3 $m^2$/g, la densité dudit papier étant inférieure à 100 kg/$m^3$ dans le cas où il présente une masse surfacique inférieure ou égale à 100 g/$m^2$.

2.  Papier selon la revendication 1, **caractérisé en ce que** le diamètre du centrifugeur est de 600 mm et sa vitesse périphérique de 60 m/s.

3.  Papier selon une des revendications précédentes, **caractérisé en ce qu'**il comporte comme additif au plus 5% de fibres de verre textiles de 6 à 7 mm de longueur et de 10 microns de diamètre moyen.

4.  Papier selon une des revendications précédentes, **caractérisé en ce qu'**il comporte un liant acrylique.

5.  Papier selon une des revendications précédentes, **caractérisé en ce qu'**il comporte un fongicide et un hydrofugeant.

6.  Application du papier selon une des revendications précédentes à la réalisation de filtres aérosols hautes performances.

7.  Application du papier selon une des revendications précédentes à la réalisation d'éléments séparateurs de batteries.

8.  Application du papier selon une des revendications précédentes à la réalisation de composites papiers imprégnés de substrats liquides non aqueux tels des résines/époxy.

## Claims

1.  Glass microfibre-based paper comprising microfibres of 2 to 3 microns in diameter and/or microfibres of less than 1 micron in diameter, characterised in that the said microfibres are glass fibres produced by means of an annular gas flow drawing process performed at a high velocity and temperature, the flow passing along the peripheral wall of a centrifuge, molten glass filaments escaping to the outside via orifices in the peripheral wall of the centrifuge of which the peripheral velocity is between 50 and 90 m/s, and of which the amount of glass drawn for 2-3 micron microfibres is less than 6 tonnes per day and per metre of centrifuge periphery and for microfibres of less than 1 micron less than 1 tonne per day and per metre of centrifuge periphery, the velocity of the annular gas flow being 200-250 m/s for 2-3 micron microfibres and 300-320 m/s for microfibres of less than 1 micron, the micronair and the specific surface area of the microfibres being 4.0-4.5 l/min respectively (for 2-3 micron microfibres) and 0.5-0.7 $m^2$/g (for 2-3 micron microfibres) and for microfibres of less than 1 micron 0.4-0.5 l/min and 2.5-3 $m^2$/g, the density of the said paper being less than 100 kg/$m^3$ if it has a surface mass which is less than or equal to 100 g/$m^2$.

2.  Paper according to Claim 1, characterised in that the diameter of the centrifuge is 600 mm and its peripheral velocity 60 m/s.

3.  Paper according to either of the preceding claims, characterised in that it comprises as an additive a maximum of 5% of textile glass fibres which are 6 to 7 mm in length and have an average diameter of 10 microns.

4.  Paper according to any one of the preceding claims, characterised in that it comprises an acrylic binder.

5.  Paper according to any one of the preceding claims, characterised in that it comprises a fungicide and a waterproofing agent.

**6.** Application of the paper according to any one of the preceding claims in the production of high-performance aerosol filters.

**7.** Application of the paper according to any one of the preceding claims in the production of battery separating elements.

**8.** Application of the paper according to any one of the preceding claims in the production of composite papers impregnated with non-aqueous liquid substrates such as epoxy resins.

**Patentansprüche**

**1.** Papier auf Basis von Mikrofasern aus Glas, Mikrofasern mit einem Durchmesser von 2 bis 3 Mikron und/oder Mikrofasern mit einem Durchmesser von weniger als 1 Mikron enthaltend,
dadurch gekennzeichnet, daß
die Mikrofasern Glasfasern sind, die durch Ausziehen mittels eines ringförmigen Gasstromes hergestellt sind bei erhöhter Geschwindigkeit und Temperatur, an der Außenwand einer Zentrifuge entlanglaufend, wobei die Filamente aus geschmolzenem Glas nach außen durch die Öffnungen der Außenwand der Zentrifuge gelangen, deren Umfangsgeschwindigkeit zwischen 50 und 90 m/s liegt und deren Glasauszug für die Mikrofasern mit 2 bis 3 Mikron kleiner als 6 Tonnen pro Tag und pro Umfangsmeter der Zentrifuge und für die Mikrofasern mit weniger als 1 Mikron kleiner als 1 Tonne pro Tag und pro Umfangsmeter der Zentrifuge beträgt, wobei die Geschwindigkeit des ringförmigen Gasstromes 200-250 m/s für die Mikrofasern mit 2 bis 3 Mikron beträgt und 300-320 m/s für die Mikrofasern von weniger als 1 Mikron, wobei der Micronaire-Wert bzw. die spezifische Oberfläche der Mikrofasern 4,0 - 4,5 l/min (für Mikrofasern von 2-3 Mikron) bzw. 0,5 - 0,7 $m^2$/g (für Mikrofasern von 2-3 Mikron) und für die Mikrofasern von weniger als 1 Mikron 0,4 - 0,5 l/min bzw. 2,5 - 3 $m^2$/g beträgt, wobei die Dichte des besagten Papieres kleiner ist als 100 kg/$m^3$, falls eine Oberflächenmasse kleiner oder gleich 100g/$m^2$ ist.

**2.** Papier nach Anspruch 1, dadurch gekennzeichnet, daß der Zentrifugendurchmesser 600 mm ist und ihre Umfangsgeschwindigkeit 60 m/s beträgt.

**3.** Papier nach einem der vorhergehenden Ansprüche, dadurch gekennzeichnet, daß es als Zusatz höchstens 5 % textile Glasfasern mit 6 bis 7 mm Länge und mit einem mittleren Durchmesser von 10 Mikron enthält.

**4.** Papier nach einem der vorhergehenden Ansprüche, dadurch gekennzeichnet, daß es ein Acrylbindemittel enthält.

**5.** Papier nach einem der vorhergehenden Ansprüche, dadurch gekennzeichnet, daß es ein Fungizid und ein wasserabweisendes Mittel enthält.

**6.** Verwendung von Papier nach einem der vorhergehenden Ansprüche zur Herstellung von Hochleistungsaerosolfiltern.

**7.** Verwendung von Papier nach einem der vorhergehenden Ansprüche zur Herstellung von Separatorelementen für Batterien.

**8.** Verwendung von Papier nach einem der vorhergehenden Ansprüche zur Herstellung von zusammengesetzten Papieren, die mit nichtwäßrigen Flüssigsubstraten, wie Harzen/Epoxiden, imprägniert sind.